# EUROPEAN PATENT APPLICATION

(11) **EP 1 982 881 A1**
(43) Date of publication of application: **22.10.2008**
(21) Application number: 08075186.0
(22) Date of filing: 13.03.2008
(51) Int. Cl.: B60T 3/00

(54) **Immobilisation device for a vehicle wheel and method for immobilising a vehicle wheel**

(30) Priority: 17.04.2007 NL 1033702
(71) Applicant: Askové Kunststof Industrie B.V., 5466 AL Veghel (NL)
(72) Inventor: van Aspert, Joan Jozef Antonius Maria, 5258 CG Berlicum (NL)
(74) Representative: Baeten, Ernest

(57) **Abstract**

The present invention relates to an immobilisation device (2) for a wheel (1) of a vehicle, comprising two chocks (3) to be positioned in front and behind a wheel (1) to prevent said wheel (1) from rolling, two arms (4) which are pivotable about a pivot point (5) relative to each other, which function as connecting means by which the chocks (3) are connected together at least during use of the immobilisation device, and tensioning means commprising a tensioning element (7) arranged for tensioning the chocks (3) against the wheel (1), wherein the arms (4) are each connected to a chock (3) on one side of the pivot point (5) and to the tensioning element (7) on the other side of the pivot point (5).

## Description

The present invention relates to an immobilisation device for a wheel of a vehicle, comprising two chocks to be positioned in front and behind a wheel respectively to prevent said wheel from rolling, two arms which are pivotable about a pivot point relative to each other, which function as connecting means by which the chocks are connected together at least during use of the immobilisation device, and tensioning means arranged for tensioning the chocks against the wheel.

US 2001/0,040,073 A1 discloses an immobilisation device for a wheel of a luggage carrying vehicle for use at airports. The immobilisation device comprises two wedge-shaped chocks, which are connected together by means of a cable which is sufficiently rigid, so that the cable will remain upright, i.e. the cable will not hang down and/or bend, when the chocks are placed on a ground surface with their short sides and the cable extends upward from the opposite short sides of the chocks. In the absence of a wheel to be immobilised, the immobilisation device can thus be placed on the ground at the airport , where it will be visible from a large distance.

A drawback of the immobilisation device that is known from US 2001/0,040,073 A1 is that there is a risk that one chock, or both chocks, will shift sideways with respect to a wheel to be immobilised when they are positioned in front or behind said wheel. On a stable surface this may happen as a result of unintentional contact of a person, an animal or an object with a chock or with the cable, as a result of which the chock or even both chocks are displaced and the wheel is no longer being immobilised. Consequently, said device is not at all suitable for use on a surface that is not very stable, for example the floor of a truck on which the vehicle has been placed for transport. When the truck is driving, vibrations may cause one chock or both chocks to become detached from the wheel to be immobilised, so that the immobilisation effect decreases or is even lost altogether. The terms "moving" or "shifting" as used herein are understood to mean movement in any direction. A chock may move sideways, outside the path of movement of the wheel, but it may also move forward or rearward in the path of movement of the wheel with respect to said wheel, as a result of which the two chocks will be spaced further apart and the wheel can start to roll forward and backward between the chocks, as a result of which the chocks may be displaced even further or the wheel may even "take a run up" and subsequently roll over the chock.

FR 529,235 A1 discloses a wheel wedge comprising two rollers, which can be positioned on either side of a wheel. Each of said rollers is rotatably connected to an end of a respective leg, and the two legs are pivotally interconnected at their opposite ends. An elastic tensioning device extends between the two legs, which tensioning device is attached to the legs near the rollers.

A drawback of the device known from FR 524,235 A1 is the fact that placing the device on a wheel is a difficult job. The fact is that the ends of the legs to which the rollers are mounted must be pulled sufficiently far apart against the tensioning force of the tensioning element to make it possible to position the rollers between a wheel to be blocked and a surface on which the wheel is supported, and that on either side of the wheel in question. This is difficult, the more so because such an operation must be carried out close to the ground surface.

Consequently it is an object of the present invention to provide an immobilisation device according to the introduction which is easy to use and wherein the operations do not necessarily have to be carried out near the ground surface. This object is accomplished by the present invention in that the arms are each connected to a chock on one side of the pivot point and to a tensioning element on the other side of the pivot point. Furthermore, arms which are pivotable relative to each other are quite suitable for pre-tensioning an object, such as a wheel, using tensioning means, and, in addition, they can be of comparatively inexpensive construction. In addition, such a device may be arranged for providing leverage, making it possible to transmit a comparatively large tensioning force to the wheel to be immobilised, using comparatively little tensioning force. The arms may in that case each be connected to a chock on one side of the pivot point and to a tensioning element on the other side of the pivot point. This makes it possible to generate the tension by exerting a pulling force on the arms.

Furthermore it is preferable if the tensioning means are arranged for adjusting the tension with which the chocks are tensioned against the wheel. This makes it possible to vary the immobilisation device in dependence on the circumstances or the wheel types with which the immobilisation device is used.

To realise a precise adjustment of the tension and to make it possible to adapt the immobilisation device to tyre pressure differences or small wheel size differences it is advantageous if the tensioning means are arranged for stepless adjustment of the tension with which the chocks are tensioned against the wheel.

To be able to remove the chocks in a simple manner after use thereof on a wheel immobilised by means of the immobilisation device, it is preferable if the tensioning means are adapted for releasing the tension when the chocks are in position in front and behind the wheel.

In a preferred embodiment of the present invention, the connecting means comprise two arms which are pivotable relative to each other.

The arms are preferably made of plastic material or a metal. Plastic and metal are both materials which make it possible to realise an advantageous combination of strength and low cost. Aluminium and plastic material have the advantage of having a comparatively low specific weight, making it possible to realise a device which is light in weight. Stainless steel is very strong and impervious to aggressive substances.

To realise an adequate adjustment of a desired tension and/or a universal applicability with wheels of varying diameter, it is advantageous if the tensioning means comprise a tensioning element which, at least in the tensioned position, is substantially rigid in the longitudinal direction, and locking means for locking the tensioning element in a tensioned condition.

Alternatively, in order to provide the device with an inherent tension, it is advantageous if the tensioning means comprise an elastic tensioning element. An elastic tensioning element is quite suitable for immediately correcting any displacement of the chock in a direction away from the tread of a wheel.

In a preferred embodiment of the present invention, the chocks are detachably connected to the connecting means. This makes it possible to replace the chocks in dependence on the intended use, for example replacing chocks with chocks exhibiting a different angle of inclination of the wedge shape.

To be able to replace worn-out tensioning means, or to substitute tensioning means exhibiting a feature that is not suitable for a specific use for more suitable tensioning means, it is preferable if the tensioning means are detachably connected to the connecting means.

The present invention, according to a second aspect thereof, relates to a method for immobilising a wheel of a vehicle, which method comprises the step of placing two interconnected chocks in front and behind the wheel respectively to prevent said wheel from rolling, wherein the chocks are tensioned against the wheel by tensioning means. The advantages of such a method in comparison with the prior art correspond to the advantages as discussed in the foregoing in relation to the immobilisation device.

The present invention will be discussed hereinafter, merely by way of example, with reference to an exemplary embodiment of the invention as shown in the appended figures, in which:
Figure 1 is a perspective side view of a wheel and an immobilisation device according to the invention; and
Figure 2 is a perspective view of the wheel with the immobilisation device of figure 1, seen from the other side in this case.

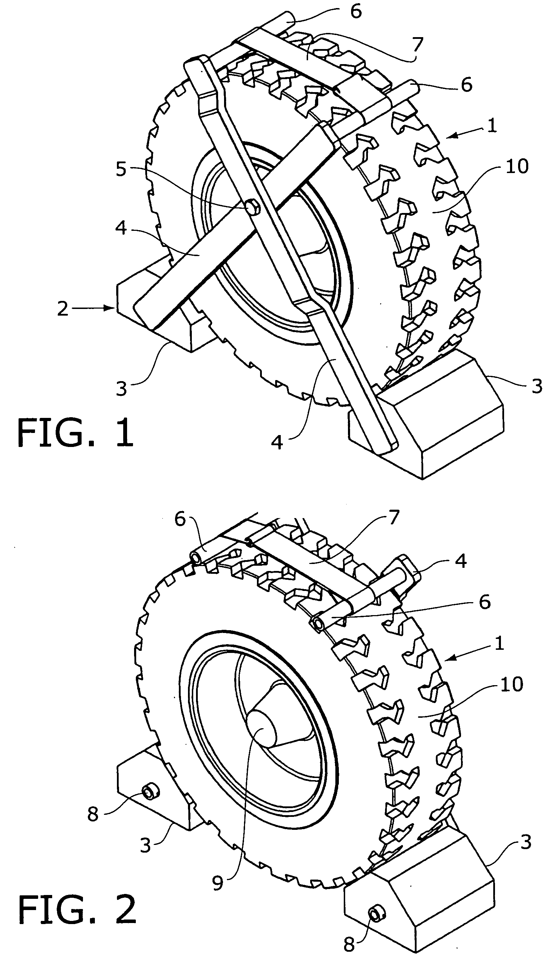

Figure 1 is a perspective view of a wheel 1, which has been immobilised by means of an immobilisation assembly 2 according to the present invention. The immobilisation assembly 2 comprises two chocks 3, which are connected together by means of two aluminium arms 4, which are pivotable about a pivot pin formed by a bolt 5. At the ends of the arms 4 that abut against the chocks 3, pins 6 extend perpendicularly to the longitudinal direction of the arms 4, which pins are pulled towards each other by means of an elastic band 7. The chocks are tensioned against the tread 10 of the wheel.

Figure 2 is a perspective side view of the other side of the wheel 1, in which like parts are indicated by the same numerals. From the combination of figure 1 and figure 2 it can be derived that each chock 3 is detachably connected to the arms 4 by means of a pin-hole connection and rings 8. If the wheel 1 forms part of a vehicle (not shown), the wheel will be connected to the axle of the vehicle via the mounting member 9.

When a vehicle is to be immobilised, for example for transport on a floor of a truck, the immobilisation assembly 2 is moved towards the wheel 1 from the outer side of the vehicle. The chocks 3 are then pulled slightly apart against the action of the elastic band 7. The immobilisation assembly 2 comprising the chocks 3 and the pins 6 is then positioned over the wheel 1 until the arms 4 are (nearly) in contact with the side of the wheel. Following that, the force counteracting the force of the elastic band 7 is released and the elastic band 7 pulls the two pins 6 towards each other. This causes the arms 4 to pivot about the bolt 5 and the chocks 3 to move towards each other, i.e. in the direction of the tread 10 of the wheel 1. As a result, the chocks 3 are pressed against the tread 10 of the wheel 1 by the tension of the elastic band, so that they can no longer be freely moved with respect to the wheel 1. The above procedure may be repeated for one or more of the other wheels of the vehicle. When the floor (not shown) on which the wheel 1 and the chocks 3 are supported is set vibrating, for example as a result of the truck driving over an uneven surface, the chocks 3 will be held in contact with the tread 10 of the wheel 1 by the tension of the elastic band 7. In the case of very strong movements there is nevertheless a possibility of a chock 3 becoming detached from the tread 10 of the wheel 1 temporarily, in spite of the tension of the elastic band 7, but in chock 3 will be immediately pressed back against the tread 10 of the wheel 1 by the tension of the elastic band 7 in that case. Thus it is virtually impossible for one of the two chocks 3, or even the entire immobilisation assembly 2, to lose contact with the tread 10 of the wheel as a result of being displaced sideways with respect to the wheel 1. With the immobilisation assembly 2 according to the present invention, the chocks 3 will not be able to move apart, due to the tension of the elastic band 7, which might create a clearance between the tread 10 and one of the chocks 3 and which might lead to the wheel 1 driving over one of the two chocks 3 by "taking a run up".

Only one embodiment of an immobilisation device according to the present invention has been described in the foregoing and shown in the drawings. It will be apparent, however, that the scope of the present invention is not limited by the description or by the figures, but that it is defined by the appended claims. Many variants will be obvious to a person skilled in the art, but said variants all fall within the scope of the present invention. The elastic band may be substituted for a tensioning strap that can be tensioned and locked by means of a ratchet, for example. To remove the immobilisation assembly, the tension of the tensioning strap will first have to be released in that case before the immobilisation assembly can be removed from the wheel. Using the ratchet, the tensioning strap can be tightened round the wheel in a continuously variable manner, as it were. The arms may be made of stainless steel or of plastic material instead of aluminium. Furthermore it is possible to use chocks which are different from the chocks described and shown in the present document, for example as regards their shape. It is furthermore possible to adapt the method so that the tensioning element, in this case the elastic band, makes contact with the tread of the wheel upon placement of the immobilisation assembly. Placing the immobilisation assembly will be more difficult in that case, but the band will reinforce the immobilisation effect of the immobilisation assembly on the wheel.

## Claims

1. An immobilisation device for a wheel of a vehicle, comprising two chocks to be positioned in front and behind a wheel respectively to prevent said wheel from rolling, two arms which are pivotable about a pivot point relative to each other, which function as connecting means by which the chocks are connected together at least during use of the immobilisation device, and tensioning means arranged for tensioning the chocks against the wheel, **characterised in that** the arms are each connected to a chock on one side of the pivot point and to a tensioning element on the other side of the pivot point.

2. An immobilisation device according to claim 1, **characterised in that** the tensioning means are arranged for adjusting the tension with which the chocks are tensioned against the wheel.

3. An immobilisation device according to claim 2, **characterised in that** the tensioning means are arranged for stepless adjustment of the tension with which the chocks are tensioned against the wheel.

4. An immobilisation device according to claim 2 or 3, **characterised in that** the tensioning means are adapted for releasing the tension when the chocks are in position in front and behind the wheel.

5. An immobilisation device according to any one or more of the preceding claims, **characterised in that** the arms are made of plastic material or a metal.

6. An immobilisation device according to any one or more of the preceding claims, **characterised in that** the tensioning means comprise a tensioning element which is substantially rigid in the longitudinal direction, and locking means for locking the tensioning element in a tensioned condition.

7. An immobilisation device according to any one or more of the claims 1-5, **characterised in that** the tensioning means comprise an elastic tensioning element.

8. An immobilisation device according to any one or more of the preceding claims, **characterised in that** the chocks are detachably connected to the connecting means.

9. An immobilisation device according to any one or more of the preceding claims, **characterised in that** the tensioning means are detachably connected to the connecting means.

10. A method for immobilising a wheel of a vehicle, comprising the step of placing two interconnected chocks in front and behind the wheel respectively to prevent said wheel from rolling, **characterised in that** the chocks are tensioned against the wheel by tensioning means.
